# EUROPÄISCHE PATENTSCHRIFT

(11) **EP 2 684 194 B1**
(45) Veröffentlichungstag und Bekanntmachung des Hinweises auf die Patenterteilung: **13.04.2016**
(21) Anmeldenummer: 12720821.3
(22) Anmeldetag: 19.04.2012
(51) Int. Cl.: G21C 19/07, G21C 19/20, G21C 19/02

(54) **VORRICHTUNG UND VERFAHREN ZUR REPARATUR EINER SCHADSTELLE IN EINEM UNTER WASSER BEFINDLICHEN WANDBEREICH EINES BEHÄLTERS ODER BECKENS**
DEVICE AND METHOD FOR REPAIRING A DAMAGED SPOT IN A WALL AREA OF A CONTAINER OR A BASIN SUBMERGED IN WATER
DISPOSITIF ET PROCÉDÉ DE RÉPARATION D'UN EMPLACEMENT ENDOMMAGÉ DANS UNE PARTIE DE PAROI IMMERGÉE D'UN RÉSERVOIR OU D'UN BASSIN

(30) Priorität: 13.12.2011 DE 102011088429; 28.03.2012 DE 102012205013
(43) Veröffentlichungstag der Anmeldung: 15.01.2014
(73) Patentinhaber: AREVA GmbH, 91052 Erlangen (DE)
(72) Erfinder: KRÄMER, Georg, 91346 Wiesenttal (DE); MEIER-HYNEK, Konrad, 91074 Herzogenaurach (DE); NEHR, Lothar, 96103 Hallstadt (DE)
(74) Vertreter: Schlögl, Markus
(86) Internationale Anmeldenummer: PCT/EP2012/057162
(87) Internationale Veröffentlichungsnummer: WO 2013/087229

(56) Entgegenhaltungen:
- JP-A- 11 079 019
- JP-A- 2005 337 884

## Beschreibung

Die Erfindung bezieht sich auf eine Vorrichtung zur Reparatur einer Schadstelle in einem unter Wasser befindlichen Wandbereich eines Behälters oder Beckens, insbesondere im Wandbereich eines Beckens einer Kernreaktoranlage, wie sie beispielsweise aus der DE 10 2008 014 544 A1 bekannt ist. Außerdem bezieht sich die Erfindung auf ein Verfahren zur Reparatur einer solchen Schadstelle. Weitere Vorrichtungen zur Anbringung an der Wand eines Reaktorbeckens sind beispielsweise aus JP 2005 337884 A und aus JPH 1179019 A bekannt.

Die Wandflächen (Seitenwände und Bodenfläche) von mit Wasser gefluteten Becken einer Kernreaktoranlage, beispielsweise die Reaktorgrube oder das Brennelementlagerbecken, sind mit einem Liner aus miteinander verschweißten Stahlplatten versehen. Die Schweißnähte, mit denen die Stahlplatten untereinander oder mit einer Unterkonstruktion verschweißt sind, sind durch beim Verschweißen unvermeidbar entstehende mechanische Spannungen anfällig für chlorinduzierte Spannungsrisskorrosion, so dass im Laufe der Zeit Risse entstehen können. Um das Austreten von Beckenwasser durch derartige Risse in die Betonwand zu vermeiden, müssen diese abgedichtet werden. Um während einer solchen Reparaturmaßnahme eine ausreichende Abschirmung des Wartungspersonals gegen radioaktive Strahlung sicherzustellen, kann insbesondere im mit Brennelementen beladenen Brennelementlagerbecken das Wasser nicht abgelassen werden, so dass die Reparatur unter Wasser erfolgen muss. In einem solchen Brennelementlagerbecken sind jedoch insbesondere die seitlichen Wandbereiche schwer zugänglich, da zwischen dem im Brennelementlagerbecken befindlichen Brennelementlagergestell und den Seitenwänden nur ein schmaler Spalt zur Verfügung steht.

Grundsätzlich ist es beispielsweise aus der DE 100 26 649 bekannt, derartige Risse durch Aufbringen eines Klebstoffes oder durch Aufkleben von Reparaturauflagen zu verschließen. Hierzu wurde die Reparaturauflage entweder von einem Taucher manuell oder mit Hilfe eines vom Beckenrand aus bedienten Gestänges an der Wand angebracht. Eine Reparatur von schwer zugänglichen, in großer Tiefe unterhalb des Wasserspiegels liegenden Schadstellen ist auf diese Weise jedoch nicht möglich.

Um auch schwer zugängliche Stellen reparieren zu können, wird in der DE 10 2008 014 544 A1 vorgeschlagen, entlang einer Seitenwand beabstandet von dieser ein Führungssystem anzuordnen, das an der Seitenwand mit Hilfe von Saugnäpfen fixiert ist, und das zum Führen eines in eine Längsrichtung des Führungssystems verfahrbaren Schlittens dient. An dem Schlitten ist eine verschiebbar gelagerte Aufnahme für eine an den die Schadstelle enthaltenden Wandbereich mit einer Klebefläche anlegbare Reparaturauflage angeordnet. Der Schlitten wird bei dieser bekannten Vorrichtung durch sein Eigengewicht in eine Endposition verfahren, in der das Führungssystem mit besonders hoher Haltekraft mit mehreren Saugnäpfen an der Seitenwand fixiert ist, um die beim Anpressen der Reparaturauflage entstehende Gegenkraft abfangen zu können. Mit der bekannten Vorrichtung ist es möglich, seitliche Wandbereiche sowie an die seitlichen Wandbereiche angrenzende Randbereiche der Bodenfläche zu erreichen, die durch innerhalb des Beckens befindliche Einbauteile, beispielsweise die Brennelementlagergestelle eines Brennelementlagerbeckens, nur über einen schmalen Spalt zugänglich sind.

Aufgrund der relativ langen Aushärtezeit des verwendeten Klebstoffes, die wenigstens 12h beträgt, ist mit den bekannten Vorrichtungen die Ausbesserung umfangreicher Schadstellen, die sich beispielsweise über die gesamte Länge einer vertikal verlaufenden Schweißnaht erstrecken können, mit einem hohen Zeitaufwand verbunden.

Der Erfindung liegt daher die Aufgabe zu Grunde, eine Vorrichtung zur Reparatur einer Schadstelle in einem unter Wasser befindlichen Wandbereich eines Behälters oder Beckens, insbesondere im Wandbereich eines Beckens einer Kernreaktoranlage anzugeben, mit der es möglich ist, eine Vielzahl von schwer zugänglichen Schadstellen oder umfangreiche, größere Schadstellen mit einem geringeren Zeitaufwand zu reparieren. Außerdem liegt der Erfindung die Aufgabe zugrunde, ein Verfahren anzugeben, mit dem vertikal verlaufende Schweißnähte auf einem größeren Längenabschnitt schnell ausgebessert werden können.

Die erstgenannte Aufgabe wird gemäß der Erfindung gelöst mit einer Vorrichtung mit den Merkmalen des Patentanspruches 1. Die Vorrichtung enthält ein entlang einer Seitenwand beabstandet von dieser anbringbares und an dieser fixierbares Führungssystem mit einem darauf geführten und in eine Längsrichtung des Führungssystems verfahrbaren ersten Schlitten, an dem eine senkrecht zu dieser Längsrichtung verschiebbar gelagerte Aufnahme für eine an den die Schadstelle enthaltenden Wandbereich mit einer Klebefläche anlegbare Reparaturauflage angeordnet ist, wobei am ersten Schlitten zumindest ein an die Seitenwand anstellbarer und an eine Saugleitung angeschlossener Haftsauger angeordnet ist

Durch die Verwendung eines auf das an der Seitenwand fixierte Führungssystem aufgleisbaren und in Längsrichtung der Führungsschiene verfahrbaren Schlittens zum Transport der Reparaturauflage zur Schadstelle ist es möglich, eine mit einem viskosen fließfähigen Klebstoff versehene Reparaturauflage in sehr kurzer Zeit in die richtige Arbeitsposition zu bringen, da diese vorher durch die Anbringung des Führungssystems festgelegt worden ist. Mit anderen Worten: Das Anbringen und Positionieren des Führungssystems kann mit hoher Präzision und ohne Zeitdruck erfolgen, da die mit dem Klebstoff versehene Reparaturauflage erst dann an die beschädigte Stelle transportiert wird, wenn das Führungssystem installiert worden ist.

Da der erste Schlitten selbst mit zumindest einem Haftsauger versehen ist, kann die beim Anlegen der Reparaturauflage an die Seitenwand entstehende Gegenkraft stets unmittelbar am Ort des Schlittens aufgenommen werden, so dass durch das Anpressen der Reparaturauflage praktisch keine quer zu seiner Längsrichtung und von der Seitenwand weg gerichteten Kräfte auf das Führungssystem ausgeübt werden. Auf diese Weise kann der erste Schlitten flexibel an unterschiedlichen Positionen des Führungssystems angehalten und an der Seitenwand fixiert werden, ohne dass es an diesen Positionen besonderer zusätzlicher Maßnahmen bedarf, um das Führungssystem sicher an der Wand zu fixieren, wie sie bei der aus der DE 10 2008 014 544 A1 bekannten Vorrichtung erforderlich sind. Dadurch können nacheinander mehrere gegenüber dem fixierten Führungssystem an unterschiedlichen Längspositionen Schadstellen ausgebessert werden, ohne dass das Führungssystem neu positioniert werden muss.

Gemäß der Erfindung umfasst die Vorrichtung wenigstens zwei erste Schlitten und zumindest einen zweiten, entlang des Führungssystems verfahrbaren Schlitten, der ausschließlich als Abstandhalter zwischen einander benachbarten ersten Schlitten dient.

Wenn außerdem der durch den zweiten Schlitten bewirkte Abstand zwischen den Reparaturauflagen annähernd der Ausdehnung einer Reparaturauflage in Längsrichtung entspricht oder nur geringfügig größer ist, können in einem zweiten Arbeitsschritt durch Benutzen derselben ersten und zweiten Schlitten die zwischen den einzelnen Reparaturauflagen nach dem ersten Schritt vorhandenen, nicht überdeckten Lücken geschlossen werden können. Wenn erster und zweiter Schlitten antriebslos sind und ausschließlich durch Wirkung der Schwerkraft verfahrbar sind, ist der Aufbau der Vorrichtung wesentlich vereinfacht.

Die Montage des Führungssystems ist vor Ort erleichtert, wenn dieses aus lösbar miteinander verbundenen Abschnitten zusammengesetzt ist.

Eine besonders einfache Befestigung des Führungssystems an der Seitenwand ist möglich, wenn an diesem an eine Saugleitung angeschlossene Haftsauger angeordnet sind.

Die zweitgenannte Aufgabe wird gelöst mit einem Verfahren mit den Merkmalen des Anspruches 6, gemäß denen in einem ersten Arbeitszyklus abwechselnd eine Mehrzahl von mit Reparaturauflagen bestückten ersten Schlitten und zweiten Schlitten auf das Führungssystem aufgegleist wird und die Reparaturauflagen angeklebt werden, und bei dem in einem zweiten Arbeitszyklus die mit Reparaturauflagen bestückten ersten und die zweiten Schlitten in umgekehrter Reihenfolge auf das Führungssystem aufgegleist werden. Auf diese Weise kann in nur zwei Arbeitszyklen eine Schweißnaht auf einer großen Länge vollständig abgedichtet werden.

Zur weiteren Erläuterung der Erfindung wird auf die Ausführungsbeispiele der Zeichnung verwiesen. Es zeigen:
- Figur 1: ein an der Seitenwand eines Brennelementlagerbeckens angeordnetes Führungssystem einer Vorrichtung in einer schematischen Seitenansicht,
- Figur 2: eine perspektives Draufsicht auf ein zum Einsatz in einem Eckbereich vorgesehenes Führungssystem mit einer Mehrzahl von darauf aufgegleisten, jeweils eine Reparaturauflage aufnehmenden ersten Schlitten ebenfalls in einer schematischen Darstellung,
- Figur 3: eine vergrößerte Darstellung eines Teilbereichs des in Fig. 2 dargestellten Führungssystems,
- Figuren 4 und 5: jeweils eine perspektivische Darstellung eines ersten bzw. zweiten Schlittens,
- Figur 6: eine perspektives Draufsicht auf ein zum Einsatz in einem ebenen Wandbereich vorgesehenes Führungssystem mit einer Mehrzahl von darauf aufgegleisten, jeweils eine Reparaturauflage aufnehmenden ersten Schlitten ebenfalls in einer schematischen Darstellung,
- Figuren 7 und 8: jeweils eine perspektivische Darstellung eines ersten Schlittens für die Reparatur einer vertikal bzw. horizontal verlaufenden Schweißnaht.

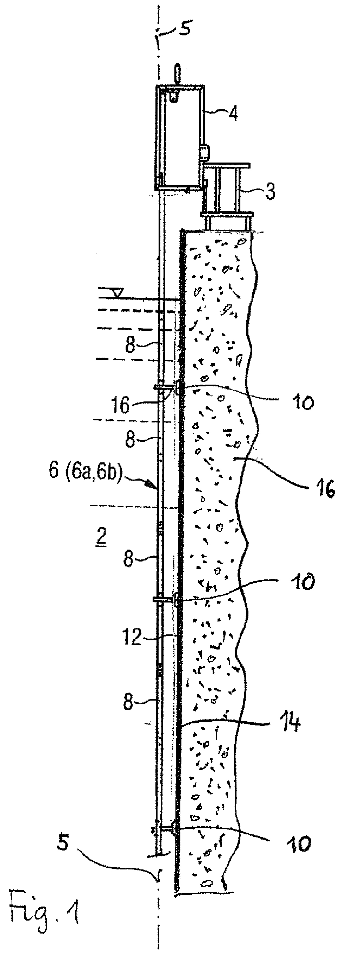

Figur 1 zeigt eine Vorrichtung in Ausgangsposition ohne erste und zweite Schlitten in einem mit Wasser gefluteten Becken 2 einer Kernreaktoranlage. Die Vorrichtung umfasst einen in einem am Beckenrand abgestellten Gestell 3 gehaltenen Tragrahmen 4 für ein sich in eine Längsrichtung 5 erstreckendes, aus zwei zueinander parallelen Führungsschienen 6a,b aufgebautes Führungssystem 6, das jeweils aus einer Mehrzahl von lösbar miteinander verbundenen Abschnitten 8 zusammengesetzt ist. Am Führungssystem 6 bzw. an den Führungsschienen 6a,b ist eine Mehrzahl von Haftsaugern 10 angeordnet, die über eine in der Figur nicht dargestellte Saugleitung mit Unterdruck beaufschlagt werden können und auf diese Weise das Führungssystem 6 vertikal an einer im Beispiel senkrecht verlaufenden Seitenwand 12 beabstandet von dieser fixieren. Die Wandflächen (Seitenwände 12 und Bodenfläche) des Beckens 2 sind mit einem Liner 14 aus miteinander verschweißten Stahlplatten versehen.

Im dargestellten Beispiel ist das Führungssystem 6 gegenüber einer vertikal verlaufenden und in der Fig. 1 nicht dargestellten Schweißnaht angeordnet und erstreckt sich bis zum ebenfalls nicht dargestellten Boden des Beckens 2. Die Schweißnaht kann eine Vielzahl von Schadstellen aufweisen, so dass sie auf ihrer gesamten Länge abgedichtet werden muss, um ein Eindringen von Beckenwasser in die Betonwand 16 zu vermeiden.

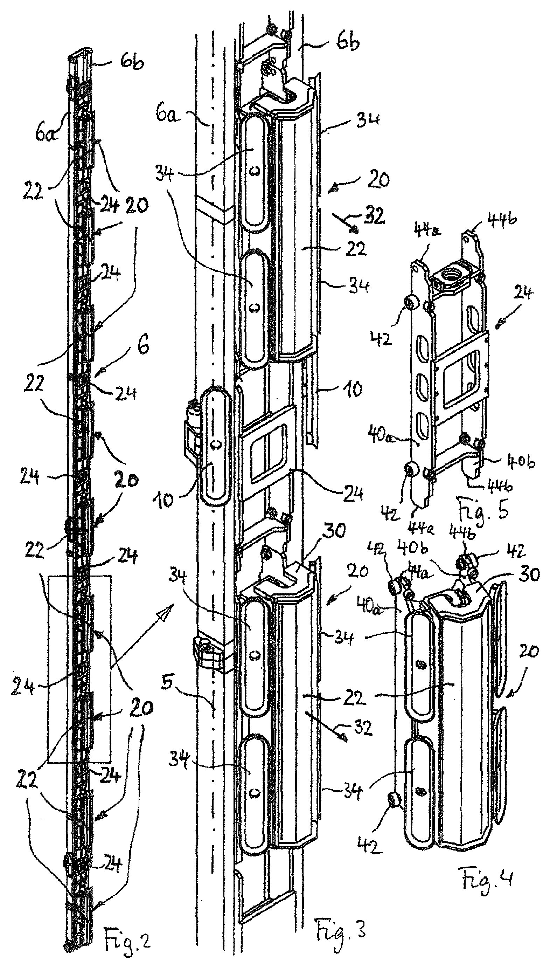

In Fig. 2 ist zu erkennen, dass das Führungssystem 6 aus zwei Führungsschienen 6a,b aufgebaut ist. Das Führungssystem 6 führt eine Mehrzahl von darauf aufgegleisten ersten Schlitten 20, die jeweils eine Reparaturauflage 22 tragen. Zwischen benachbarten ersten Schlitten 20 befindet sich jeweils ein zweiter Schlitten 24, der als Abstandhalter dient und etwa die gleiche Ausdehnung in Längsrichtung 5 aufweist wie die Reparaturauflage 22. Die ersten und zweiten Schlitten 20,24 werden abwechselnd auf das Führungssystem 6 aufgegleist und mit einer am Tragrahmen 4 befindlichen Seilwinde ausschließlich aufgrund ihres Eigengewichts, d.h. durch Wirkung der Schwerkraft nach unten verfahren, wobei die Schlitten 20,24 jeweils einen Anschlag für den darauffolgenden Schlitten 24,20 bilden.

Die erfindungsgemäße Vorrichtung ist in den Fig. 2 bis 5 beispielhaft anhand einer Ausführungsform näher veranschaulicht, die zur Reparatur einer im Eckbereich eines Beckens befindlichen Schweißnaht vorgesehen ist. Dies geht deutlicher aus der vergrößerten Darstellung gemäß Fig. 3 hervor.

Jeder erste Schlitten 20 trägt eine Aufnahme 30, die am ersten Schlitten 20 quer zur Längsrichtung 5 des Führungssystems 6 in eine durch einen Pfeil angedeutete Vorschubrichtung 32 verschiebbar gelagert ist und die Reparaturauflage 22 aufnimmt.

Die am ersten Schlitten 20 angeordnete Aufnahme 30 entspricht in ihrem Aufbau im Wesentlichen der aus der DE 10 2008 014 544 A1 bekannten Aufnahme. Ebenso wie bei der bekannten Vorrichtung wird die Reparaturauflage 22 in der Aufnahme 30 durch Erzeugen eines Unterdrucks auf eine der Klebefläche abgewandten Rückseite fixiert. Durch diese Maßnahme ist ein einfaches Auslösen oder Freigeben der Reparaturauflage 22 möglich, wenn diese nach Aushärten des Klebstoffes an der Wand dauerhaft fixiert ist. Zum Erzielen ausreichend hoher Anpresskräfte ist die Aufnahme 30 in Vorschubrichtung 32 pneumatisch verschiebbar auf dem ersten Schlitten 20 gelagert.

Abweichend von den in der DE 10 2008 014 544 A1 näher erläuterten Ausführungsformen ist jedoch gemäß der Erfindung der erste Schlitten 20 selbst mit zumindest einem an eine Seitenwand des Beckens anstellbaren und an eine Saugleitung angeschlossenen Haftsauger 34 versehen.

Für den Einsatz im Eckbereich ist als Reparaturauflage 22 ein Winkelprofil vorgesehen, das auf der entsprechend geformten Aufnahme 30 angeordnet ist. Das Führungssystem 6 sowie die ersten Schlitten 20 sind mit paarweise unter 90° zueinander ausgerichteten Haftsaugern 10 bzw. 34 versehen, mit denen das Führungssystem 6 bzw. die ersten Schlitten 20 an zwei rechtwinklig aneinander grenzenden Seitenwänden fixiert werden können.

Gemäß Fig. 4 und 5 weisen erste und zweite Schlitten 20, 24 jeweils zwei Kufen 40a,b auf, an denen seitliche Rollen 42 angeordnet sind, mit denen die Schlitten 20,24 entlang der Führungsschienen 6a,b abrollen.

Die schmalen Stirnflächen 44a,b an den Enden der Kufen 40a,b dienen jeweils als Anschlagfläche für den im Stapel jeweils benachbarten Schlitten, wie dies in Fig. 3 deutlich zu erkennen ist. Der Abstand zwischen den Reparaturauflagen 30 einander benachbarter erster Schlitten 20 ist annähernd gleich oder allenfalls geringfügig größer als die Ausdehnung der Reparaturauflagen 30 in Längsrichtung 5.

Mit der Vorrichtung gemäß der Erfindung kann eine sich in eine Längsrichtung erstreckende Schweißnaht praktisch auf ihrer gesamten Länge in zwei Arbeitszyklen abgedichtet werden. In einem ersten Arbeitszyklus werden abwechselnd erste und zweite Schlitten 20,24 aufgegleist und die mit Klebstoff beschichteten Reparaturauflagen 22 pneumatisch an die Wand angedrückt. Nach Aushärten des Klebstoffes - etwa 12 Stunden - werden die Aufnahmen 30 zurückgefahren und die ersten und zweiten Schlitten 20,24 nacheinander vom Führungssystem 6 entnommen. Das Führungssystem 6 bleibt in unveränderter Position an der Seitenwand fixiert. In einem zweiten Arbeitszyklus werden die ersten Schlitten 20 erneut mit einer mit einem Klebstoff beschichteten Reparaturauflage 22 versehen und die ersten und zweiten Schlitten 20,24 werden in gegenüber dem ersten Arbeitszyklus umgekehrter Reihenfolge abwechselnd auf das immer noch an der Seitenwand fixierte Führungssystem 6 aufgegleist. Der Abstand zwischen den im ersten Arbeitszyklus an die Wand angeklebten Reparaturauflagen 22 ist so bemessen, dass ein sich im zweiten Arbeitszyklus nach dem Ankleben der Reparaturauflagen zwischen benachbarten Reparaturauflagen 22 gegebenenfalls befindender Spalt durch den beim Anpressen seitlich austretenden Klebstoff überdeckt wird.

Abweichend von dem in Fig. 2 bis 5 dargestellten Ausführungsbeispiel können mit entsprechend konstruktiv angepassten Aufnahmen, Führungssystemen und Reparaturauflagen auch plane Wandflächen oder zylindrische Behälter oder Rohre repariert werden.

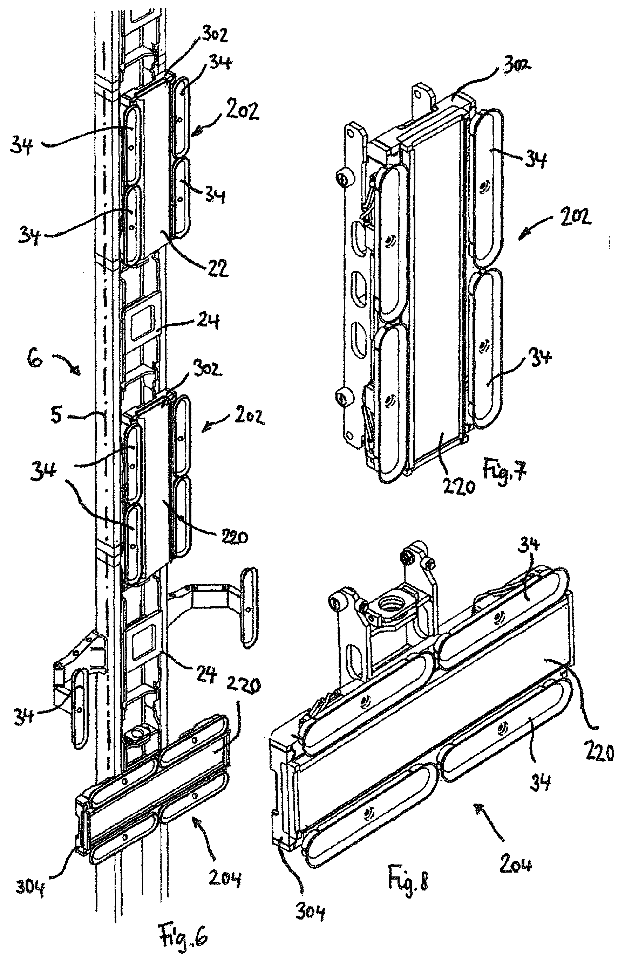

Gemäß Fig. 6 sind auf das Führungssystem 6 eine Mehrzahl von ersten Schlitten 202, 204 aufgegleist, deren Aufnahme 302, 304 zur Reparatur schadhafter Stellen an einer ebenen Wandfläche mit einer eine ebenen Reparaturauflage 220 versehen ist. Die auf den ersten Schlitten 202 angeordneten und auf sich in Längsrichtung des Führungssystems 6 erstreckenden Aufnahmen 302 angeordneten Reparaturauflagen 220 dabei zur Reparatur von Schweißnähten, die sich in eine vertikale Richtung erstrecken. Der in Fig. 6 dargestellte und am Führungssystem 6 aufgegleiste Schlitten 204 trägt eine Aufnahme 304, die sich quer zur Längsrichtung 5 des Führungssystems 6 erstreckt. Dementsprechend dient die auf dieser angeordnete ebenfalls plane Reparaturauflage 220 zur Reparatur horizontal an einer planen Beckenwand verlaufender Schweißnähte. Auch in diesem Ausführungsbeispiel sind die einander benachbarten ersten Schlitten 202, 204 jeweils durch einen zweiten Schlitten 24 voneinander beabstandet.

In Fig. 7 und 8 sind die ersten Schlitten 202 bzw. 204 jeweils in einer vergrößerten perspektivischen Darstellung wiedergegeben.

Die Vorrichtung gemäß der Erfindung kann in vorteilhafter Weise auch eingesetzt werden, um eine einzelne Schadstelle oder voneinander in Längsrichtung des Führungssystems beabstandete Schadstellen zu reparieren, die sich an unterschiedlichen Längspositionen des mit wenigen Heftsaugern an der Seitenwand fixierten Führungssystems befinden, da die beim Anpressen der Reparaturauflage entstehende Reaktionskraft unmittelbar von dem mit Haftsaugern versehenen ersten Schlitten aufgenommen wird.

## Patentansprüche

1. Vorrichtung zur Reparatur einer Schadstelle (21) in einem unter Wasser befindlichen Wandbereich eines Behälters oder Beckens, insbesondere im Wandbereich eines Beckens einer Kernreaktoranlage, mit einem entlang einer Seitenwand (12) beabstandet von dieser anbringbaren und an dieser fixierbaren Führungssystem (6), wenigstens zwei darauf geführten und in eine Längsrichtung (5) des Führungssystems (6) verfahrbaren ersten Schlitten (20,202,204), an denen jeweils eine verschiebbar gelagerte Aufnahme (30) mit einer an den die Schadstelle enthaltenden Wandbereich mit einer Klebefläche anlegbaren Reparaturauflage (22,220) angeordnet ist, und mit zumindest einem entlang des Führungssystems verfahrbaren und in Arbeitsposition zwischen zwei benachbarten ersten Schlitten (20,202,204) als Abstandhalter angeordneten zweiten Schlitten (24) wobei an den ersten Schlitten (20,202,204) jeweils zumindest ein an die Seitenwand (12) anstellbarer und an eine Saugleitung angeschlossener Haftsauger (34) angeordnet ist.

2. Vorrichtung nach Anspruch 1, bei dem der durch den zweiten Schlitten (24) bewirkte Abstand zwischen den Reparaturauflagen (22) annähernd der Ausdehnung einer Reparaturauflage (22,220) in Längsrichtung (5) entspricht.

3. Vorrichtung nach einem der vorhergehenden Ansprüche, bei der erste und zweite Schlitten (20,202,204 bzw. 24) antriebslos sind.

4. Vorrichtung nach einem der vorhergehenden Ansprüche, bei der das Führungssystem (6) aus lösbar miteinander verbundenen Abschnitten (8) zusammengesetzt ist.

5. Vorrichtung nach einem der vorhergehenden Ansprüche, mit einer Mehrzahl von am Führungssystem (6) angeordneten, an eine Saugleitung angeschlossenen Haftsaugern (10) zum Fixieren des Führungssystems (6) an der Seitenwand (12).

6. Verfahren zur Reparatur einer Schadstelle mit einer Vorrichtung nach einem der Ansprüche 1 bis 5, bei dem in einem ersten Arbeitszyklus abwechselnd eine Mehrzahl von mit Reparaturauflagen (30) bestückten ersten Schlitten (20,202) und zweiten Schlitten (24) auf das Führungssystem (6) aufgegleist wird und die Reparaturauflagen (22,220) angeklebt werden, und bei dem in einem zweiten Arbeitszyklus die erneut mit Reparaturauflagen (30) bestückten ersten Schlitten (20,202) und die zweiten Schlitten (24) in umgekehrter Reihenfolge auf das Führungssystem (6) aufgegleist werden.

## Claims

1. Device to repair a damaged area (21) in a wall region, located under water, of a container or basin, in particular in the wall region of a basin of a nuclear reactor plant, having a guide system (6) which is able to be attached along a side wall (12) at a distance from this and is able to be fixed to this, at least two first carriages (20, 202, 204) which are guided thereon and are moveable in a longitudinal direction (5) of the guide system (6), on which carriages respectively a receiver (30), which is mounted to be displaceable, is arranged having a repair support (22, 220) which is able to be applied to the wall region containing the damaged area using an adhesive surface, and having at least one second carriage (24) which is moveable along the guide system and is arranged in the work position between two adjacent first carriages (20, 202, 204) as a spacer, wherein respectively at least one suction cup (34) which is engaged on the side wall (12) and is connected to a suction line is arranged on the first carriages (20, 202, 204).

2. Device according to claim 1, in which the distance between the repair supports (22) caused by the second carriage (24) corresponds approximately to the expansion of a repair support (22, 220) in the longitudinal direction (5).

3. Device according to one of the preceding claims in which first and second carriages (20, 202, 204 or 24) are not provided with a drive.

4. Device according to one of the preceding claims, in which the guide system (6) is assembled from sections (8) which are connected releasably to one another.

5. Device according to one of the preceding claims, having a plurality of suction cups (10) which are arranged on the guide system (6) and are connected to a suction line to fix the guide systems (6) to the side wall (12).

6. Method to repair a damaged area using a device according to one of claims 1 to 5 in which, in a first work cycle, alternately, a plurality of first carriages (20, 202) and second carriages (24) equipped with repair supports (30) is transferred to the rails of the guide system (6) and the repair supports (22, 220) are glued on, and in which, in a second work cycle, the first carriages (20, 202) and the second carriages (24) which are newly equipped with repair supports (30) are transferred to the rails of the guide system (6) in reverse order.

## Revendications

1. Dispositif de réparation d'un défaut (21) dans une partie de paroi immergée d'un réservoir ou d'un bassin, en particulier dans la partie de paroi d'un bassin d'une installation de réacteur nucléaire, ledit dispositif comprenant un système de guidage (6) pouvant être monté et fixé le long d'une paroi latérale (12) à distance de celle-ci et sur ce système de guidage (6) immobilisable sont placés au moins deux premiers charriots (20, 202, 204) guidés dessus et pouvant être déplacés dans une direction longitudinale (5) du système de guidage (6), chariots sur lesquels est disposé un logement (30), monté de manière à pouvoir coulisser, comportant un revêtement de réparation (22, 220) pouvant être appliqué avec une surface de collage contre la partie de paroi contenant le défaut, et au moins un deuxième charriot (24), servant d'écarteur, qui peut se déplacer le long du système de guidage et disposé, en position de travail, entre deux premiers charriots (20, 202, 204) voisins, au moins une ventouse adhésive (34), pouvant être appliquée contre la paroi latérale (12) et raccordée à une conduite d'aspiration, étant disposée sur les premiers charriots (20, 202, 204).

2. Dispositif selon la revendication 1, dans lequel la distance, provoquée par le deuxième charriot (24), entre les revêtements de réparation (22) correspond approximativement à l'étendue du revêtement de réparation (22, 220) dans la direction longitudinale (5).

3. Dispositif selon l'une quelconque des revendications précédentes dans lequel le premier et le deuxième charriot (20, 202, 204 respectivement 24) n'ont pas d'entraînement.

4. Dispositif selon l'une quelconque des revendications précédentes dans lequel le système de guidage (6) est constitué de tronçons (8) reliés entre eux de manière détachable.

5. Dispositif selon l'une quelconque des revendications précédentes comportant une pluralité de ventouses adhésives (10) disposées sur le système de guidage (6) et raccordées à la conduite d'aspiration, pour fixer le système de guidage (6) contre la paroi latérale (12).

6. Procédé de réparation d'un défaut à l'aide d'un dispositif selon l'une quelconque des revendications 1 à 5, dans lequel, dans un premier cycle opératoire, une pluralité de premiers charriots (20, 202) et de deuxièmes charriots (24), équipés de revêtement de réparation (30), est enraillée alternativement sur le système de guidage (6) et les revêtements de réparation (22, 220) sont collés, et dans lequel, dans un deuxième cycle opératoire, les premiers charriots (20, 202), de nouveau équipés de revêtements de réparation (30) et les deuxièmes charriots (24) sont enraillés dans l'ordre inverse sur le système de guidage (6).
